# EUROPEAN PATENT SPECIFICATION

(11) **EP 1 339 162 B1**
(45) Date of publication and mention of the grant of the patent: **01.02.2006**
(21) Application number: 02003183.7
(22) Date of filing: 18.02.2002
(51) Int. Cl.: H02M 5/12

(54) **Device for modulating a voltage applied to a load, in particular for the supply of a constant current load circuit**
Vorrichtung zur Modulation einer an eine Last angelegten Spannung, insbesondere für die Versorgung einer Konstantstromverbraucherschaltung
Dispositif pour la modulation d'une tension appliquée à une charge, en particulier pour l'alimentation d'un circuit de charge à courant constant

(43) Date of publication of application: 27.08.2003
(73) Proprietor: O.C.E.M. S.P.A., 40016 S. Giorgio di Piano (IT)
(72) Inventor: Basile, Gianluigi, 40050 Argelato (Bologna) (IT); Facchini, Gianni, 44040 S. Carlo (Ferrara) (IT)
(74) Representative: Dall'Olio, Giancarlo

(56) References cited:
- PATENT ABSTRACTS OF JAPAN vol. 1999, no. 11, 30 September 1999 (1999-09-30) & JP 11 150951 A (NEC FUKUSHIMA LTD), 2 June 1999 (1999-06-02)
- PATENT ABSTRACTS OF JAPAN vol. 1995, no. 04, 31 May 1995 (1995-05-31) & JP 07 015953 A (MATSUSHITA ELECTRIC IND CO LTD), 17 January 1995 (1995-01-17)

## Description

The present invention relates to the technical field concerning devices that modulate the voltage applied to a load.

In particular the present invention relates to a modulation device for feeding a load circuit on which it is necessary to impose the circulation of a constant effective value current.

It has been noted that in most of the industrial applications, it is possible to feed a load with a variable voltage from a main having a voltage that is substantially constant in amplitude and frequency, after interposing suitable modulation devices.

If it is necessary to supply the load at a different frequency and voltage with respect to the corresponding values present on the main, it is opportune to interpose a rectifier group (able to carry out the alternating - direct voltage conversion) connected in cascade to an inverter group (in charge of the direct - alternating voltage conversion).

If it is sufficient to supply the load at the main frequency, it is opportune to interpose a modulation group able to suitably modify, according to the given specifications, the value of the voltage at the output terminals.

In this case semiconductor or solid state power devices are widely used, generally arranged in a bridge-connection, that can be of the semi-controlled type, in which it is possible to command the trigger but not the cut-off of the same, or rather of the controlled type, in which it is possible to command both the trigger and the cut-off of the same.

In the case in which the load circuit is made up of a high-medium power illumination system, the individual loads are preferably connected together in series, in such a way as to obtain the same unique current through them.

Generally, the electric loads connected in series use coupling transformers whose corresponding secondary coil supply the load mesh.

This enables a supply of known voltage to impose the desired intensity of current to the load mesh, depending on the number of loads provided for.

Obviously, because of various connection and/or disconnection of the loads, each load can be subjected to a considerably variable power, relative to its own operating cycle.

The JP-11150951 shows a device for modulating the voltage supplied to a load, including two parallel connected modulation bridges which are controlled by a control module. The control module enables and disables the modulation bridges on the basis of the detection of a current sensor.

The JP-7015953 shows a protective circuit, in which a temperature sensor determine the switching-off time after a. short circuit has occurred in the load, on the basis of the temperature detected in the proximity of a switching element. However, the sensor temperature of JP-7015953 only determines the moment in which the power supply is to be interrupted and does not enable a the supplementary modulation group, which is maintaned actovated until the temperature lowers to the standard operation value.

The object of the present invention, therefore, is to propose a device for modulating the voltage applied to a load, in particular for the supply of a constant current load circuit, capable of providing at the output terminals a modulated stepless variable voltage, independently from the operation temperature of the same device.

A further object of the present invention is to propose a device for modulating the voltage applied to a load, capable of ensuring a current with a substantially constant effective value through the load circuit.

Another object of the present invention is to propose a modulation device obtained by a technical solution of simple conception, of particularly low costs, characterised by high functional standards and reliability, so as to not preclude use in pre-existing systems.

The above mentioned objects are obtained in accordance with the invention which is defined by claim 1.

The characterising features of the present invention will be set out in the following description of a preferred, but not unique embodiment, with reference to the enclosed drawings, in which:
- Figure 1 illustrates a circuit diagram of a general system of loads connected in series, fed by the proposed modulation device, with the interposition of a coupling transformer;

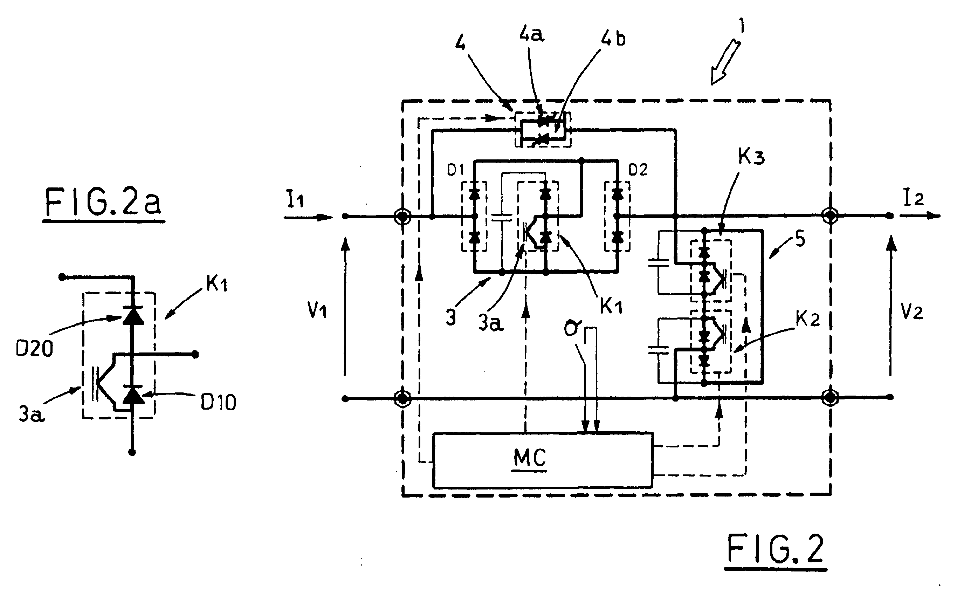

- Figure 2 illustrates an enlarged circuit diagram of the modulation device used in Figure 1;
- Figure 2a shows a view, enlarged with respect to the previous Figures, of a particularly significant element of the modulation device indicated in Figure 2.

With reference to the attached figures, the general reference numeral 1 indicates the proposed voltage modulation device for supplying, with the interposition of a transformer T, a load circuit or mesh. The load circuit or mesh includes, as an example, by a plurality of loads (Z1, ...., Zn) connected in series, therefore crossed the same current I3.

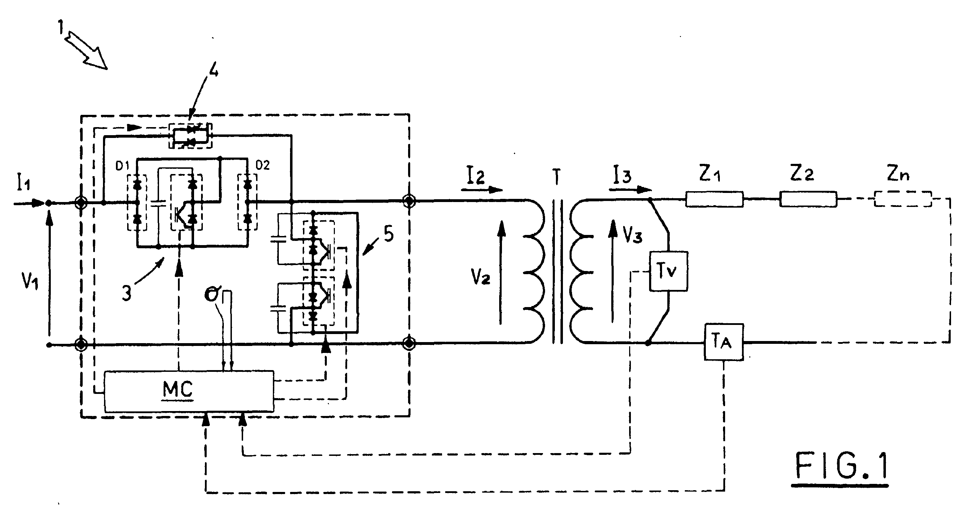

The load circuit includes suitable measurement means (TA, TV), for example consisting of so-called "current" and "voltage" measurement transformers, able to continuously detect the corresponding the values of current I3 passing through these loads (Z1,...., Zn) and voltage V3 present at the terminals of the secondary coil of the transformer T (Figure 1).

The modulation device 1 includes input terminals, at which the input voltage V1 is supplied, and corresponding output terminals, at which the output voltage V2 is produced.

The output terminals are directly connected to the primary coil of the transformer T, through which a primary current I2 pass, possibly with the interposition of a safety device (not illustrated) capable of detecting the direct components of the primary current I2.

Interposed between an input terminal and the corresponding output terminal, the device 1 includes a main modulation bridge 3 that, in relation to the signals coming from a relative control module MC, is able to supply the output terminals with an effective voltage value V2 modulated with respect to the wave form of the input voltage V1.

This main modulation bridge 3 includes, for example, a set of three branches connected in parallel, substantially consisting of two branches including diodes D1, D2, each consisting of two diodes in cascade, and a third branch comprising an operative group K1 in which a controlled semiconductor element 3a operates, advantageously activated by the control module MC according to the known PWM (Pulse Wave Modulation) operative method.

Within the operative group K1, the controlled semiconductor element 3a has a protection diode D10 connected in parallel and is connected with its collector (indicated with the reference C) to the anode of a diode D20, in turn connected to in series to a stabiliser capacitor, provide for stabilisation of the voltage at the ends of the same semiconductor element 3a.

Both the semiconductor element 3a-protection diode D10 group and the diode D20-capacitor group are connected so as to result in parallel to the two branches D1 and D2.

A supplementary modulation group 4 is connected in parallel to the main modulation bridge 3, so that, in disabled conditions of the same bridge 3, depending on the signals coming from the control module MC, the supplementary group 4 is able to supply the output terminals with an effective voltage value V2 modulated with respect to the wave form of the input voltage V1.

The supplementary modulation group 4 is advantageously formed by a couple of semiconductor devices 4a and 4b, connected in anti-parallel, that is to say with the anode of one connected to the cathode of the other, and vice versa.

These semiconductor devices 4a and 4b, include advantageously SCR (Silicon Controlled Rectifiers) that, due to the particular connection, work on a relative half-wave of the voltage.

Furthermore, the modulation device 1 is provided with a sensor θ, interacting with the control module MC, for the detection of the temperature in the proximity of the same modulation device 1, for example in the proximity of the main modulation bridge 3.

Thus, the control module MC is able to disable and/or enable the main modulation bridge 3 and the supplementary modulation group 4 depending on the signals coming from the sensor θ and from the measurement means (TA, TV) connected to the load circuit, for example in order to maintain substantially constant the effective value of the I3 current circulating in the same load circuit.

A shunt group 5 is connected in parallel to the output terminals of the modulation device, in order to enable, depending on the signals coming from the control module MC, the circulation of the primary current I2, circulating in the primary coil of the transformer T, during the disable state of the main modulation bridge 3.

The shunt group 5 advantageously includes operative groups K2 and K3, connected in a suitable way, entirely analogous to the K1 operative group present in the main modulation bridge 3 as described above.

A brief description follows of the general operation of the proposed modulation device 1, for which the respective values of current I1 and voltage V1 are detected at the input terminals, in the case that a substantially constant effective value of the current 13 passing through the load circuit is desired.

In nominal operation conditions, the input voltage V1 is suitably modulated by the main modulation bridge 3 in which the semiconductor element 3a is activated by the control module MC in accordance with the PWM (Pulse Wave Modulation) method, in relation to the signals coming from the measurement means (TA, TV) present in the load circuit and from the sensor θ.

In load conditions, with the cooling circuit of the modulation device 1 operating correctly, the temperature values of the main bridge 3 remain below a critical value θc, and the sensor θ does not intervene on the control module MC, that maintains enabled the main bridge 3 only.

In the operating state of the main bridge 3, in which the PWM method is used to command the interruption of the current circulating through the semiconductor element 3a, the primary current I2 circulating through the primary coil of the transformer T can close up on the shunt group 5, through the suitable semiconductor element controlled by one of the operative groups K2 and K3.

This allows to prevent any overvoltage caused by the presence of magnetic energy in the circuit, which energy tends to accumulate in the inductance elements, as well as to maintain a power factor which tends to 1 as regards the supply network upstream of the modulation device 1.

If, due to the insertion and/or disconnection of a load Zj (j=1, ..., n) on the load circuit, some fluctuations were found in the current I3 and/or the voltage V3 and the ends of the secondary coil of the transformer T, the measurement means (TA, TV) would detect their values that, evaluated by the control module MC, would require a modification of the PWM duty cycle of the semiconductor element 3a of the main modulation bridge 3.

In the operating state of the main modulation bridge 3, the supplementary modulation group 4, in accordance to a command issued by the control module MC, remains inactive.

In case of an anomaly and/or a failure of the cooling circuit of the modulation device 1, the temperature in the proximity of the main bridge 3 would tend to increase up to a critical value θc beyond which the sensor θ intervenes on the control module MC, disabling the main bridge 3 and enabling contextually, in suitable phase relation, the supplementary modulation group 4.

Actually, the supplementary group 4, activated by the control module MC, provides at the output terminals an effective modulated value of the input voltage V1,_.as long as the main modulation bridge remains disabled, obviously with a form of output wave characterised by parameters of lower quality.

The switching imposed by the control module MC of the main bridge 3 on the auxiliary group 4, in fact, stops the increase of temperature in the proximity of the modulation device 1 to be stopped, thereby limiting the thermal stress to which the circuit components of the same are subjected and bringing it to substantially lower values with respect to the critical temperature θc.

In particular, this allows to protect the integrity of the components of the main bridge 3, particularly sensitive to the temperature variations, which therefore are not damaged.

During operation of the supplementary modulation group 4, the shunt group 5, remains disabled.

If, due to the connection and/or disconnection of a load Zj (j=1, ..., n) to and from the load circuit, some fluctuations were found in the current I3 and/or in the voltage V3 present at the terminals of the secondary coil of the transformer T, the measurement means (TA, TV) would detect their values that, evaluated by the control module MC, would require a modification of the duty cycle of the SCR 4a and 4b of the supplementary group 4.

As long as the anomaly and/or the failure of the cooling circuit are not eliminated, the supplementary group 4 remains enabled and the main bridge 3 remains disabled, notwithstanding the temperature of the modulation device 1 descending to well below the critical value θc that had previously disabled the main bridge 3 and enabled the supplementary group 4.

This does not exclude that, for particular operating specifications, one could plan enabling-disabling cycles of the main bridge 3 and the supplementary group 4 in relation to the temperature present in the proximity of the modulation device 1, pre-established around the critical value θc.

In this case the sensor θ would keep the main bridge 3 enabled while the temperature values are less than the critical value θc, disabling the supplementary group 4, and would enable the supplementary group 4, disabling the main bridge 3, when the temperature values are above the critical value θc.

This would create a series of thermal transients around the critical value θc. Generally, it is desirable to avoid such thermal transients in order not to excessively stress the components of the modulation device 1.

Obviously, both the main modulation bridge 3 and the supplementary modulation group 4 can be created with the preferred circuit layout, provided that they supply the output terminals of the modulation device 1 with an effective modulated value of the input voltage V1.

For example, the supplementary modulation group 4 can include controlled type semiconductor devices activated by the control module MC with the PWM method.

If the semiconductor devices of the supplementary modulation group 4 are of a semi-controlled type, as in the SCR using example described above, it is possible to provide oscillation circuits associated thereto that force disabling the components.

Therefore, the proposed modulation device allows best modulation of the voltage applied to a load, in particular for supplying a constant current load circuit, independently from the operating temperature of the device.

The feedback between the modulation device and the load circuit, by measurement means, which is able to detect the values of the current and/or of the voltage at the terminals of the secondary coil of the transformer, ensures the supply of the loads without any substantial fluctuation of the current involved thereby.

The working groups of the main modulation bridge and of the shunt group are formed substantially by already assembled blocks of elements, therefore their cost is particularly low.

## Claims

1. Device (1) for modulating the voltage on a load, in particular for supplying a constant current load circuit, including corresponding input and output terminals, at the ends of which respective input voltage (V1) and output voltage (V2) are present, the device including:
- at least one main modulation bridge (3), which is interposed between an input terminal and the corresponding output terminal, and is capable of supplying the output terminals with an effective modulated voltage value of the cited input voltage (V1), in relation to the signals coming from a relative control module (MC);
- at least one supplementary modulation group (4), which is connected in parallel to the main modulation bridge (3) and is capable of supplying the aforementioned output terminals, in disabled condition of said main bridge (3), with an effective modulated voltage value of said input voltage (V1), in relation to the signals coming from said control module (MC);
- at least one sensor (θ), which is connected to the aforementioned control module (MC), for detecting the temperature in proximity of said modulation device (1) in which
said control module (MC) disables said main modulation bridge (3) in relation to the signals coming from the said sensor (θ) in case the temperature in the proximity of the main bridge (3) tends to increase up to a critical value (θc) and enables contextually, the supplementary modulation group (4) as long as the main modulation bridge (3) remains disabled, so as to stop the increase of temperature in the proximity of the modulation device (1) and to substantially lower the temperature.

2. Modulation device (1), according to claim 1, **characterised in that** it includes at least one shunt group (5), which is connected in parallel to said output terminals of the modulation device, for allowing circulation of the currents in said load circuit, in accordance with the signals coming from the control module (MC), during the disabled condition of said main modulation bridge (3).

3. Modulation device (1), according to claim 1 or 2, **characterised in that** it includes measurement means (TA,TV), for supplying said control module (MC) with the values of current and voltage of said load circuit.

4. Modulation device (1), according to claim 1 or 2, **characterised in that** said main modulation bridge (3) is enabled by said control module (MC) in accordance with the PWM modulation method.

5. Modulation device (1), according to claim 1 or 2, **characterised in that** said supplementary modulation group (4) is enabled by said control module (MC) in accordance with the PWM modulation method.

6. Modulation device (1), according to claim 2, **characterised in that** said shunt group (5) is enabled by said control module (MC) in accordance with the PWM modulation method.

7. Modulation device (1), according to claim 1 or 2 or 5, **characterised in that** said supplementary modulation group (4) includes a couple of semiconductor devices (4a, 4b), at least of semi-controlled type and connected in anti-parallel way.

8. Modulation device (1), according to claim 7, **characterised in that** said semiconductor devices (4a,4b) include SCR components connected in anti-parallel way.

9. Modulation device (1), according to claim 1 or 2 or 3, **characterised in that** it includes a transformer (T) coupling said load circuit with said output terminals of said device.

10. Modulation device (1), according to claim 1, **characterised in that** said load circuit is formed by a plurality of loads (Z1,...., Zn) connected in series and fed with values of current (I3) constant in amplitude.

## Patentansprüche

1. Vorrichtung (1) zur Modulation einer an eine Last angelegten Spannung, insbesondere für die Versorgung einer Konstantstromverbraucherschaltung, aufweisend entsprechende Eingangs- und Ausgangsklemmen, an derren Enden eine entsprechende Eingangsspannung (V1) und Ausgangsspannung (V2) vorhanden sind, wobei die Vorrichtung aufweist:
- zumindest eine Modulationshauptbrücke (3), die zwischen einer Eingangsklemme und der entsprechenden Ausgangsklenme angeordnet ist, und in der Lage ist, die Ausgangsklemmen mit einem nutzbar modulierten Spannungswert der erwähnten Eingangsspannung (V1) in Bezug zu den Signalen, die von einem entsprechenden Steuerungsmodul (MC) kommen, zu versorgen;
- zumindest eine zusätzliche Modulierungsgruppe (4), die parallel zu der Modulationshauptbrücke (3) verbunden ist, und in der Lage ist, die zuvor erwähnten Ausgangsklemmen in einem abgeschalteten Zustand der Kauptbrücke (3) mit einem nutzbaren modulierten Spannungswert der Eingangsspannung (V1) in Bezug auf die Signale, die von dem Steuermodul (MC) kommen, zu versorgen;
- zumindest einen Sensor (θ), der mit dem zuvor erwähnten Steuermodul (MC) verbunden ist, zum Ermitteln der Temperatur in der Umgebung der Modulationsvorrichtung (1), bei der
das Steuermodul (MC) die Modulationshauptbrücke (3) in Bezug zu den Signalen, die von dem Sensor (θ) kommen, abzuschaltet in dem Fall, indem die Temperatur in der Umgebung der Hauptbrücke (3) über einen kritischen Wert (θc) sich erhöht und in diesem Kontext die Zusatzmodulationsgruppe (4) einschaltet, solange die Modulationshauptbrücke (3) abgeschaltet verbleibt, um die Erhöhung der Temperatur in der Umgebung der Modulationsvorrichtung (1) zu stoppen und im wesentlichen die Temperatur zu senken.

2. Modulationsvorrichtung (1) gemäß Anspruch 1, **dadurch gekennzeichnet, daß** zumindest eine Nebenschlußgruppe (5) aufweist, die parallel zu den Ausgangsklemmen der Modulationsvorrichtung verbunden ist, um eine Zirkulation der Ströme in der Verbrauchsschaltung zu ermöglichen in Übereinstimmung mit den Signalen, die von dem Steuermodul (MC) kommen während des abgeschalteten Zustandes der Modulationshauptbrücke (3).

3. Modulationsvorrichtung (1) gemäß Anspruch 1 oder 2, **dadurch gekennzeichnet, daß** die Meßmittel (TA, TV) aufweisen, zum Versorgen des Steuermoduls (MC) mit Werten des Stromes und der Spannung der Verbraucherschaltung.

4. Modulationsvorrichtung (1) gemäß Anspruch 1 oder 2, **dadurch gekennzeichnet, daß** die Modulationshauptbrücke (3) durch das Steuermodul (MC) in Übereinstimmung mit dem PWM-Modulationsverfahren eingeschaltet wird.

5. Modulationsvurrichtung (1) gemäß Anspruch 1 oder 2, **dadurch gekennzeichnet, daß** die zusätzliche Modulationsgruppe (4) durch das Steuermodul (MC) in Übereinstimmung mit dem PWM-Modulationsverfahren eingeschaltet wird.

6. Modulationsvorrichtung (1) gemäß Anspruch 2, **dadurch gekennzeichnet, daß** die Nebenschlußgruppe (5) durch das Steuermodul (MC) in Übereinstimmung mit dem PWM-Modulationsverfahren eingeschaltet wird.

7. Modulationsvorrichtung (1) gemäß Anspruch 1, 2 oder 5, **dadurch gekennzeichnet, daß** die Zusatzmodulationsgruppe (4) ein Paar Halbleitervorrichtungen (4a, 4b) aufweist, zumindest von der halbgesteuerten Art, und verbünden auf eine antiparallele Art.

8. Modulationsvorrichtung (1) gemäß Anspruch 7, **dadurch gekennzeichnet, daß** die Halbleitervorrichtungen (4a, 4b) SCR-Komponenten aufweisen, die in einer antiparallelen Art verbunden sind.

9. Modulationsvorrichtung (1) gemäß Anspruch 1, 2 oder 3, **dadurch gekennzeichnet, daß** sie einen Transformator (T) aufweist, der die Verbraucherschaltung mit den Ausgangsklemmen der Vorrichtung verbindet.

10. Modulationsvorrichtung (1) gemäß Anspruch 1, **dadurch gekennzeichnet, daß** die Verbraucherschaltung durch eine Mehrzahl von Verbrauchern (Z1, ..., Zn) gebildet ist, die in Reihe geschaltet sind und mit Werten von Strom (I3) versorgt werden, konstant in Amplitude.

## Revendications

1. Dispositif de modulation (1) de la tension sur une charge, en particulier pour l'alimentation d'un circuit de charge à courant constant, incluant des bornes d'entrée et de sortie correspondants, et la tension d'entrée (V1) et la tension de sortie (V2) respectives sont présentes au niveau des extrémités de celles-ci, le dispositif incluant :
au moins un pont de modulation principal (3), qui est intercalé entre une borne d'entrée et la borne de sortie correspondante, et est apte à alimenter les bornes de sortie avec une valeur de tension modulée effective de la tension d'entrée citée (V1), par rapport aux signaux provenant d'un module de commande (MC) relatif;
au moins un groupe de modulation (4) supplémentaire, qui est connecté en parallèle au pont de modulation principal (3) et est capable d'alimenter les bornes de sortie susmentionnées, dans un état désactivé dudit pont principal (3), avec une valeur de tension modulée effective de ladite tension d'entrée (V1), par rapport aux signaux provenant dudit module de commande (MC) ;
au moins un capteur (θ), qui est connecté au module de commande (MC) susmentionné, pour détecter la température à proximité dudit dispositif de modulation (1), dans lequel :
ledit module de commande (MC) désactive ledit pont de modulation principal (3) par rapport aux signaux provenant dudit capteur (θ), dans le cas où la température à proximité du pont principal (3) tend à augmenter jusqu'à une valeur critique (θc) et active, de façon contextuelle, le groupe de modulation supplémentaire (4) tant que le pont de modulation principal (3) reste désactivé, de manière à mettre fin à l'augmentation de la température à proximité du dispositif de modulation (1) et à abaisser sensiblement la température.

2. Dispositif de modulation (1) selon la revendication 1, **caractérisé en ce qu'**il inclut au moins un groupe de shunts (5), qui est connecté en parallèle auxdites bornes de sortie du dispositif de modulation, pour permettre la circulation des courants dans ledit circuit de charge, selon les signaux provenant du module de commande (MC), lors de l'état désactivé dudit pont de modulation principal (3).

3. Dispositif de modulation (1) selon la revendication 1 ou 2, **caractérisé en ce qu'**il inclut un moyen de mesure (TA, TV), pour alimenter ledit module de commande (MC) avec les valeurs de courant et de tension dudit circuit de charge.

4. Dispositif de modulation (1) selon la revendication 1 ou 2, **caractérisé en ce que** ledit pont de modulation principal (3) est activé par ledit module de commande (MC) selon le procédé de modulation MID.

5. Dispositif de modulation (1) selon la revendication 1 ou 2, **caractérisé en ce que** ledit groupe de modulation supplémentaire (4) est activé par ledit module de commande (MC) selon le procédé de modulation MID.

6. Dispositif de modulation (1) selon la revendication 2, **caractérisé en ce que** ledit groupe de shunts (5) est activé par ledit module de commande (MC) selon le procédé de modulation MID.

7. Dispositif de modulation (1) selon la revendication 1, 2 ou 5, **caractérisé en ce que** ledit groupe de modulation supplémentaire (4) inclut un couple de dispositifs semi-conducteurs (4a, 4b), au moins du type semi commandé et connectés de façon antiparallèle.

8. Dispositif de modulation (1) selon la revendication 7, **caractérisé en ce que** lesdits dispositifs semi-conducteurs (4a, 4b) incluent des composants SCR connectés de façon antiparallèle.

9. Dispositif de modulation (1) selon la revendication 1, 2 ou 3, **caractérisé en ce qu'**il inclut un transformateur (T) couplant ledit circuit de charge auxdites bornes de sortie dudit dispositif.

10. Dispositif de modulation (1) selon la revendication 1, **caractérisé en ce que** ledit circuit de charge est formé d'une pluralité de charges (Z1, ..., Zn) connectées en série et alimentées avec des valeurs de courant (13) d'amplitude constante.
